# EUROPÄISCHE PATENTSCHRIFT

(11) **EP 1 993 802 B1**
(45) Veröffentlichungstag und Bekanntmachung des Hinweises auf die Patenterteilung: **30.09.2009**
(21) Anmeldenummer: 07703918.8
(22) Anmeldetag: 16.01.2007
(51) Int. Cl.: B29C 45/16, B29C 45/76, B29C 67/24

(54) **INTEGRIERTE SYSTEMVORRICHTUNG ZUR HERSTELLUNG VON VERBUNDKÖRPERN**
INTEGRATED SYSTEM APPARATUS FOR PRODUCTION OF COMPOSITES
DISPOSITIF DE SYSTÈME INTÉGRÉ POUR LA FABRICATION DE CORPS COMPOSITES

(30) Priorität: 03.03.2006 DE 102006009900
(43) Veröffentlichungstag der Anmeldung: 26.11.2008
(73) Patentinhaber: KraussMaffei Technologies GmbH, 80997 München (DE)
(72) Erfinder: GRUBER, Marco, 81247 München (DE)
(74) Vertreter: Zollner, Richard
(86) Internationale Anmeldenummer: PCT/EP2007/050408
(87) Internationale Veröffentlichungsnummer: WO 2007/101738

(56) Entgegenhaltungen:
- WO-A-03/013824
- WO-A-20/04041503
- DE-C1- 19 524 395
- DE-C1- 19 650 854
- GB-A- 1 332 883
- JP-A- 6 270 202
- US-A- 5 814 353
- US-A- 5 906 782
- US-A1- 2005 214 559

## Beschreibung

Die vorliegende Erfindung betrifft eine integrierte Systemvorrichtung zum Herstellen von Verbundkörpern gemäß dem Oberbegriff des Anspruchs 1.

Die Herstellung von Kunststoffverbundkörpem, insbesondere die aus einer Kombination eines Polyurethan-Materials mit einem Thermoplastmaterial bestehen, ist aus dem Stand der Technik bekannt. In diesem Zusammenhang wird allgemein auf die DE 196 508 54 hingewiesen.

Bei den bisherigen kombinierten Systemanlagen sind jedoch die verschiedenen handelsüblichen Einheiten lediglich nebeneinander gestellt und faktisch separat zueinander bzw. miteinander betrieben worden. So wird bei der Materialkombination eines Polyurethan-Materials mit einem Thermoplast-Material zur Herstellung eines PUR-Thermoplast-Verbundkörpers meist eine Polyurethan-Anlage mit einer eigenen Versorgung und Steuerung einer handelsüblichen Spritzgießmaschine mit einer ebenfalls eigenen Versorgung und Steuerung beigestellt. Wie aus der DE 196 508 54 ersichtlich ist, können die verschiedenen Hydrauliksysteme, Elektrikversorgungseinheiten und Steuerungen zwar bedingt miteinander verknüpft sein. In der Regel müssen jedoch immer getrennte Steuerungen bedient werden. Auch die Dokumentation für die Datensätze und die Maschinenparameter sind meist getrennt gehalten.

Dieser Umstand resultiert daraus, dass derart verschiedene Maschinen und Anlagen wie Spritzgießmaschinen und PUR-(Polyurethan-)Anlagen unterschiedliche Steuer- sowie Versorgungserfordemisse aufweisen. So unterscheiden sich sowohl die Hardwarekomponenten wie auch die Softwareumfänge von Spritzgießmaschine und PUR-Anlage signifikant.

Die separaten Steuerungen und Versorgungseinrichtungen bedingen jedoch, dass für jedes System die jeweiligen Ersatzteile bevorratet werden müssen. Auch beschränkt sich eine Schnittstelle beispielsweise zwischen einer Spritzgießmaschine und einer PUR-Anlage meist auf den Austausch nur einiger, wesentlicher Signale und Parameter. In der Regel ist eine Überwachung der Funktionen auf den jeweiligen Steuerungen separat einzustellen; genauso wie die Bedienung der Gesamtanlage meist separat durchzuführen ist.

Die Folge ist eine relativ komplexe Bedienung, die nur ein gut geschultes Personal erfüllen kann. Überdies sind jeweils auf die einzelnen Einheiten zugeschnittene Bedienphilosophien zu berücksichtigen, was die Bedienung und Überwachung der Anlage zusätzlich erschwert.

Die Aufgabe der vorliegenden Erfindung ist darin zu sehen, ein einheitliches Steuerungs- und Regelungskonzept sowie eine einheitliche Bedienphilosophie für eine Anlage zur Herstellung eines solchen Verbundkörpers zu verwirklichen.

Diese Aufgabe wird durch die im Anspruch 1 genannten Merkmale gelöst.

Ein Kernbestandteil der vorliegenden Erfindung ist darin zu sehen, dass nur eine einzige, zentrale Steuerung für das gesamte integrierte System vorgesehen ist. Überdies ist wenigstens eine gemeinsame Versorgungseinrichtung vorgesehen, die mit der zentralen Steuerung verbunden ist. Die wenigstens eine gemeinsame Versorgungseinrichtung beaufschlagt zumindest die Polyurethaneinheit (PUR-Einheit) wie auch die Plastifizier- und Einspritzeinheit gemeinsam.

Damit verlässt man die bisher verfolgte Strategie von verschiedenen Bedienphilosophien für getrennte Einheiten, wie dies die Polyurethan-Einheit und die Plastifizier- und Einspritzeinheit darstellen. Vielmehr kann nun mit der integrierten Gesamtsteuerung aber auch der zumindest einen gemeinsamen Versorgungseinrichtung eine einheitliche Bedienphilosophie mit einer einheitlichen Dokumentation sowie einer gemeinsamen Regelung zur Verfügung gestellt werden. Auch kann damit erstmals eine wirklich integrierte Anlage aus PUR-Einheit und Spritzgießeinheit zur Verfügung gestellt werden.

Bei der Versorgungseinrichtung handelt es sich um eine gemeinsame Hydraulikversorgungseinrichtung und ein gemeinsames Elektrikversorgungssystem. In einer bevorzugter Ausführungsform ist zudem eine gemeinsame Pneumatik versorgungsseinrichtung vorgesehen. Die verschiedenen Komponenten der integrierten Systemvorrichtung, wie die Polyurethan-Einheit, die Plastifizier- und Einspritzeinheit und die Schließeinheit umfassen jeweils eine Vielzahl von Antrieben, Schalt- und Verstellmöglichkeiten, die durch die gemeinsamen Versorgungseinrichtungen mit dem jeweiligen Versorgungsträger beaufschlagt werden.

Bei der Plastifizier- und Einspritzeinheit ist zumeist für die Rotation von Plastifizierschnecken ein Drehantrieb erforderlich, der hydraulisch, elektrisch und in Ausnahmefällen eventuell auch pneumatisch ausgebildet sein kann. Die Einspritzeinrichtung arbeitet zumeist ebenfalls hydraulisch oder elektrisch. Die Dosierung zur Zuführung von Material zu einer Plastifiziereinheit kann wiederum von der zentralen Steuerung unmittelbar beaufschlagt sein, um einen gewünschten Volumenstrom von Material in die Plastifiziereinheit zu realisieren. Überdies wird die Einspritzeinheit beim Einspritzen in der Regel an eine Formaufspannplatte bzw. ein Formwerkzeug angedrückt, diese Anpresskraft wird zumeist ebenfalls durch einen hydraulischen oder einen elektrischen Antrieb realisiert. Auch abgesehen von diesen Anrieben können noch weitere Verbraucher wie eine Heizeinrichtung etc. mit Energie oder einer Schalt- oder Antriebsquelle versorgt werden müssen.

Die Schließeinrichtung wird beim Öffnen oder Zufahren meist elektrisch oder hydraulisch beaufschlagt. Der Schließdruck wird oftmals rein hydraulisch oder aber bei einer Kniehebeleinrichtung auch elektrisch realisiert. Darüber hinaus gibt es im Bereich der Schließeinheit noch Auswerfereinrichtungen, die ebenfalls elektrisch oder hydraulisch, aber auch pneumatisch betätigt werden. Bei den Formwerkzeugen sind noch Kernzüge zu nennen, die ebenfalls meist hydraulisch oder pneumatisch beaufschlagt sind. Ferner sind noch Temperiereinrichtungen im Bereich des Werkzeug zu erwähnen, die ebenfalls gesteuert und betrieben werden müssen.

Auf der Seite der Polyurethan-Einrichtung können die Mischköpfe hydraulisch oder elektrisch beaufschlagt werden. Überdies sind Pumpen zur Versorgung des Mischkopfes mit den Polyurethan-Komponenten vorgesehen, die in der Regel elektrisch angetrieben werden.

Dies sei nur ein Auszug der verschiedenen Beaufschlagungserfordernisse von jeweiligen Elementen und Antrieben der Einheiten einer integrierten Systemvorrichtung. Die Beispiele machen klar, wie vielzählig die verschiedenen Kombinationsmöglichkeiten sein können.

Die vorliegende Erfindung ist darauf gerichtet, dass für das gesamte System immer eine gemeinsame Versorgungseinrichtung für die Hydraulik und für die Elektrik vorgesehen sind. Zudem könnte eine gemeinsame Pneumatik versorgungseinrichtung vorgeshen sein. Damit können zwei verschiedene Hydraulikversorgungseinrichtungen, zwei verschiedene Pneumatikversorgungseinrichtungen oder zwei oder mehr verschiedene Elektroversorgungseinrichtungen vermieden werden. Entsprechend gering ist auch der Wartungsaufwand.

Die jeweiligen gemeinsamen Versorgungseinrichtungen sind mit der zentralen Steuerung verbunden, die damit eine Kontrolle des Gesamtsystems besitzt und über verschiedenen Sensoren auch einen Überblick über die Abläufe im System erhält.

Die zentrale Steuerung ist aber nicht nur zur Beaufschlagung der Versorgungseinrichtungen mit diesen verbunden, sie kann auch mit einzelnen Komponenten in der Polyurethan-Einheit, in der Plastifizier- und Einspritzeinheit, in der Schließeinheit aber auch in anderen Einheiten unmittelbar gekoppelt sein.

Eine integrierte Systemvorrichtung zur Herstellung eines Verbundkörpers, insbesondere aus Polyurethan und Thermoplast kann bestehen aus einer Schließeinheit, einer oder mehrerer Plastifizier- und Einspritzeinheiten zur Herstellung eines oder mehrerer Thermoplastbauteile oder einer oder mehrerer Thermoplastschichten, teilweise mit unterschiedlichen Materialien und ein oder mehrere Polyurethan-Einheiten zur Herstellung einer oder mehrerer PUR-Bauteile oder -schichten.

Die Polyurethan-Einheit kann dabei ein Dosiermodul für die Zudosierung von flüssigen Polyurethan-Komponenten, wie Polyol und Isocyanat und evtl. anderer Zugabestoffe, einen Mischkopf zum Vermischen der Polyurethan-Komponenten umfassen. Optional können ein oder mehrere Farbmodule für die separate Farbdosierung in die Polyurethan-Komponenten integriert vorgesehen sein. Optional ist auch die Beistellung einer Gasdosierstation möglich, die für die Gasbeladung einer oder mehrerer der Polyurethan-Komponenten oder des Polyurethan-Gemisches vorgesehen ist.

Da das Polyurethan-Material in der Regel stark an Kavitätswänden haften bleiben kann, ist es zweckmäßig, diese vor der Einbringung des Polyurethan-Gemisches mit einem Trennmittel zu benetzen. Dazu ist eine Einrichtung zur Einbringung eines solchen Trennmittels zweckmäßig. Die Einrichtung kann beispielsweise einen Roboterarm umfassen, an dessen vorderem Ende eine Spuldüse angeordnet ist, die möglicherweise mittels des Roboterarms über die Kavitätswand hinweg verfahren werden kann.

Je nachdem, welche Antriebe hydraulisch ausgebildet sind, kann die gemeinsame Hydraulikversorgungseinrichtung für den Betrieb der Schließeinheit, der Polyurethan-Einheit, der Plastifizier- und Einspritzeinheit, des PUR-Mischkopfes, der verschiedenen Anpressvorrichtungen, der Gasdosierstation oder der Farbmodule ausgelegt sein. Sind die verschiedenen Antriebe pneumatisch betrieben, so kann die gemeinsame Pneumatikversorgungseinrichtung für die Beaufschlagung ebenfalls der Schließeinheit, der Plastifizier- und Einspritzeinheit, der Anpresseinheiten, des Polyurethan-Mischkopfes, der Gasdosierstation, der Farbmodule oder auch der Einrichtung zur Aufbringung eines Trennmittels ausgelegt sein. In ähnlicher Weise trifft dies für die gemeinsame Elektrikanlage zu, soweit die einzelnen elektrische Antriebe oder elektrische Schalt- und Verstellelemente aufweisen.

Der Polyurethan-Mischkopf sollte in Richtung der Schließeinheit bzw. des Formwerkzeugs hin bzw. von diesem weg verfahren werden können. Zu diesem Zweck ist es günstig, eine Montage- und Verfahreinheit vorzusehen, auf dem zumindest der PUR-Mischkopf angeordnet ist. Die Montage- und Verfahreinrichtung ermöglicht das einfache Handling des PUR-Mischkopfes in einer Gesamtanlage. Über eine Andrückvorrichtung, beispielsweise einen Hydraulik- oder eine Pneumatikzylinder oder auch einen Elektromotor kann der PUR-Mischkopf während des Einspritzvorgangs an einen Angusskanal eines Formwerkzeug angedockt sowie angepresst werden. Überdies ist nach jedem Zyklus oder auch nur zu bestimmten Zeitpunkten ein Abheben des Mischkopfes vom Formwerkzeug möglich, wodurch auch das Reinigen des Polyurethan-Angussbereiches erleichtert wird. Überdies kann mittels der Montage- und Verfahrvorrichtung ein Einstellen, aber auch Testen des PUR-Mischkopfes unmittelbar an der Maschine erfolgen, ohne dass der Mischkopf demontiert werden muss. Ist der PUR-Mischkopf nämlich zurückgefahren, können PUR-Freischüsse durchgeführt werden. Weiterhin wird auf diese Weise eine gute Zugänglichkeit zu den Mischkammerdüsen des Mischkopfes erreicht. Die je nach Produktionsparametem eventuell zu wechselnden Mischkammerdüsen können somit direkt an der Maschine getauscht werden, ohne dass der PUR-Mischkopf insgesamt demontiert werden muss. Sollen - je nach Anwendungsfall - verschiedene PUR-Mischköpfe einsetzbar sein, so kann eine Adapterplatte vorgesehen werden, die vorzugsweise auf einem Standardgehäuse einer Schließeinheit angebracht ist. Damit kann auch eine Zweikomponenten-Spritzgießmaschine flexibel für die Verarbeitung mit einer PUR-Verfahrenseinheit ausgerüstet werden, wobei die zweite Plastifizier- und Einspritzeinrichtung lediglich gegen eine PUR-Einheit auszutauschen ist.

Es kann auch vorteilhaft sein, den PUR-Mischkopf am Werkzeug mechanisch verriegeln zu können. Bei einer Störung oder einem Zwischenfall während des PUR-Einspritzzyklusses kann der Mischkopf dann nicht aus seiner Position gedrückt werden.

Die Polyurethan-Mischköpfe weisen zumeist einen Mischkammerkolben und in vielen Fällen auch einen Reinigungskolben auf. Diese werden oftmals hydraulisch über ein Hydrauliksystem einer Dosieranlage angesteuert. Bei PUR-Einheiten aus dem Stand der Technik sind die zur Schaltung notwendigen Hydraulikventile zumeist im Bereich der Dosieranlage verbaut und mit langen Hydraulikverbindungsleitungen mit dem Mischkopf verbunden. Problematisch ist dabei die genaue zeitliche Ansteuerung des Mischkolbens und des Reinigungskolbens, da durch die langen Hydraulikleitungen eine präzise zeitliche Ansteuerung erschwert wird (z. B. Problem der Schlauchatmung oder Luft in den Leitungen). Aufgrund der Integration in die Gesamtanlage können die Ansteuerventile nunmehr direkt im Bereich des Mischkopfes platziert werden. Dadurch ist es möglich, die Steuerleitungen sehr kurz auszuführen. Dies resultiert in einem höheren Systemdruck, da der Druckverlust in den kurzen Leitungen gering gehalten werden kann. Auch entfällt eine meist aufwändige Entlüftung der Mischkopfhydraulik. Weiterhin können kleine und kompakte Schnellkupplungssysteme für die Mischkopfhydraulik eingesetzt werden.

Hinsichtlich der gemeinsamen Hydraulikversorgungseinrichtung kann diese mit getrennt arbeitenden Systemkreisen versehen sein. Dabei sollte zumindest ein Systemkreis für die Polyurethan-Einheit und ein Systemkreis für die Plastifizier- und Einspritzeinheit verwendet werden.

Alternativ zu hydraulisch angetriebenen Polyurethan-Mischköpfen ist es möglich, diesen Baustein rein elektrisch anzutreiben. So kann der Mischkammerkolben und der Reinigungskolben, falls dieser vorhanden ist, über Elektromotoren direkt angesteuert werden. Dazu eignen sich insbesondere sogenannte High-Torque-Elektromotore. In diesem Fall würde der PUR-Mischkopf keine Hydraulikkomponenten mehr enthalten. Durch die Ansteuerung mit Elektromotoren kann die Präzision der Kolbenansteuerung deutlich verbessert werden, insbesondere im Hinblick auf die Positionsgenauigkeit und die Geschwindigkeitsregelung der Ansteuerung. Möglich wäre es damit auch, eine weggeregelte Ansteuerung des Reinigungskolbens im PUR-Mischkopf während eines Einspritzvorganges (Schuss) infolge der präzisen Elektromotorensteuerung durchzuführen. Der Reinigungskolben kann in diesem Fall während des gesamten PUR-Schusses positionsgenau geöffnet und geschlossen werden. Damit kann die PUR-Vermischung während eines Schusses kontrolliert werden. Dies ist mit der heute üblich eingesetzten Hydraulikansteuerung nicht möglich.

Eine weitere Möglichkeit, die aus dem Einsatz von Elektromotoren für den Betrieb des PUR-Mischkopfes resultiert, ist eine druckgeregelte Ansteuerung des Reinigungskolbens während des Schusses aufgrund einer Drehmomenterfassung am Elektromotor. Der Reinigungskolben kann während des Schussvorgangs abhängig vom Gegendruck in der Reinigungskammer geöffnet und geschlossen werden. Damit ist es möglich, die PUR-Vermischung während des Schusses zu kontrollieren. Dies ist mit den heute erhältlichen Hydraulikansteuerungen ebenfalls nicht möglich.

Schließlich kann auch eine geschwindigkeitsgeregelte Ansteuerung des Reinigungskolbens im PUR-Mischkopf während des Schusses aufgrund einer Geschwindigkeitskontrolle des Elektromotors erfolgen. Der Reinigungskolben kann also während eines Einbringvorgangs geschwindigkeitsgeregelt angesteuert werden.

Natürlich ist es auch jederzeit möglich, mehrere Plastifizier- und Einspritzvorrichtungen mit mehreren Polyurethan-Einheiten zu kombinieren. Diese verschiedenen Einheiten können um die Schließeinheit in den an sich bekannten Stellungen (Huckepack, vertikal, L-Stellung etc.) erfolgen.

Überdies ist es auch möglich, die PUR-Einheit in den verschiedenen Positionen zur Schließeinheit bzw. zur Plastifizier- und Einspritzeinheit anzuordnen. So ist es möglich, wie nachfolgend noch dargestellt wird, die PUR-Einheit - bezogen auf die Schließeinheit - gegenüberliegend der Plastifizier- und Einspritzeinheit zu befestigen. Gleichwohl kann die PUR-Einheit auf der gleichen Seite wie auch die Plastifizier- und Einspritzeinheit, z.B. in einer Huckepack-Weise, befestigt sein. Überdies ist es möglich, die PUR-Einheit oberhalb, unterhalb oder seitlich der Schließeinheit anzuordnen und zwar entweder einer festen, einer beweglichen Aufspannplatte zugeordnet oder einer Zwischenplatte zugeordnet. Bei der Zuordnung kann die PUR-Einheit unmittelbar an der Aufspannoder Zwischenplatte selbst oder an einem Gestell montiert sein, dass bzgl. der Aufspann- oder Zwischenplatten fest oder beweglich angeordnet ist.

Die Schließeinheit selbst kann auf vielfältige Weise ausgebildet sein. Eine Minimalausstattung sind zwei Aufspannplatten, an denen Werkzeughälften befestigt sind. Diese beiden Aufspannplatten müssen relativ zueinander aufeinander zu und voneinander weg bewegbar sein, um ein Öffnen und Schließen zu ermöglichen. In einer Ausbaustufe ist zwischen den beiden Aufspannplatten beispielsweise eine Zwischenplatte, insbesondere in Form einer horizontal oder vertikal drehbaren Wendeplatte angeordnet. Mit solch einer Anordnung können zwei Werkzeuge in der Schließeinheit aufgenommen werden, die unterschiedliche Formhohlräume ausbilden, wobei in einem ersten Formhohlraum ein Thermoplast-Körper und in dem zweiten Formhohlraum eine PUR-Beschichtung gebildet werden kann. Natürlich sind bei einer horizontal drehbaren Wendeplatte auch mehr als zwei Aufspannplatten zuordenbar, wodurch sich eine entsprechende Anzahl von Formwerkzeugen platzieren lassen. Die Schließeinheit kann aber auch eine Drehtischanordnung aufweisen, die adaptiert oder integriert in eine Aufspannplatte ausgebildet sein kann, so dass eine Drehung einer oder mehrerer Formhälften möglich ist. Solche Drehtisch-Anordnungen sind aus dem Stand der Technik bekannt. Alternativ oder ergänzend zur Drehtisch-Anordnung ist auch eine Schiebetisch-Anordnung möglich, bei der Formwerkzeughälften in seitlicher Richtung verfahren werden können. Ferner ist es möglich, die Schließeinheit mit einer Indexplatte auszubilden, bei der Werkzeugbereiche verschoben werden können.

Hinsichtlich der Farbdosierung kann ein oder können mehrere Farbmodule in unmittelbarer Nähe des Polyurethan-Mischkopfes platziert werden. Auch hier ist es möglich, die Farbleitungen kurz zu halten, so dass ein schnelles einfaches Wechseln der Farbmodule möglich ist. Aufgrund der kurzen Farbleitungen wird auch die Präzision und Reproduzierbarkeit der Farbdosierung erhöht. Überdies kann aufgrund der kurzen Farbleitungslängen der Reinigungsaufwand bei einem Farbwechsel deutlich vermindert werden.

Auch ist es möglich, die Schließkraft am Formwerkzeug in Abhängigkeit von Parametern zu regeln. So kann die Schließkraft in Abhängigkeit vom PUR-Injektionsdruck im Mischkopf eingeregelt werden. Beispielsweise könnte am Schussanfang mit einer niedrigen Schließkraft die Entlüftung unterstützt werden. Am Schussende, wenn der maximale Druck erreicht wird, kann die Schließkraft auf einen Maximalwert erhöht werden, um ein Überspritzen zu vermeiden.

Einen Vorteil bietet auch die Werkzeugtemperatursteuerung in Zusammenhang mit dem Betrieb der Polyurethan-Einheit. So kann die Werkzeugtemperatur während eines Polyurethan-Einbringvorganges auf einem niedrigen Niveau gehalten werden. Durch die niedrigen Temperaturen wird die unmittelbar startende Vernetzungsreaktion stark verzögert. Dies führt dazu, dass der Füllvorgang langsamer und mit niedrigerem Druck durchgeführt werden kann. Aufgrund des niedrigen Druckes kann wiederum ein Überspritzen der Kavität verhindert werden. Am Schussende wird das Formwerkzeug blitzartig erwärmt, so dass insgesamt doch eine schnelle Reaktionszeit erreicht ist.

Das vorliegend vorgestellte integrierte System ist überaus variabel einsetzbar. So besteht die Möglichkeit, dass Teile der PUR-Einheit noch eine weitere integrierte Anlage mit versorgen. So können beispielsweise die Behälter für die PUR-Ausgangsmaterialien, die Pumpen, das Dosiermodul etc. auch für andere integrierte Systeme verwendet werden, welche jeweils einen zugeordneten Mischkopf aufweisen.

Es ist aber auch möglich, den PUR-Mischkopf bei Bedarf abzubauen und separat zu betreiben. Genauso ist es möglich, falls dies die Anwendung erfordert, den Mischkopf oder die Plastifizier- und Einspritzeinheit alleine zu betreiben und den jeweils anderen Systemteil zu deaktivieren. Eine weitere Möglichkeit besteht mit einem Master-Slave Betrieb von Plastifizier- und Einspritzeinheit sowie PUR-Einheit. Hierbei können mehrere Anlagen zyklussynchron gesteuert oder geregelt werden, wobei als Master beispielsweise die Plastifizier- und Einspritzeinheit dienen kann.

Die vorliegende Erfindung wird nachfolgend mit Bezug auf die beiliegenden Zeichnungen anhand eines Ausführungsbeispiels näher erläutert. Die Zeichnungen zeigen in
- Figur 1: eine stark schematisierte Seitenansicht einer erfindungsgemäßen, integrierten Systemvorrichtung,
- Figur 2: eine vergrößerte Darstellung der Montage- und Verfahreinheit der integrierten Systemvorrichtung aus Figur 1 und
- Figur 3: eine modifizierte integrierte Systemvorrichtung in Draufsicht, wobei die Schließeinrichtung nun mit einer Wendeplatteneinheit ausgeführt ist.

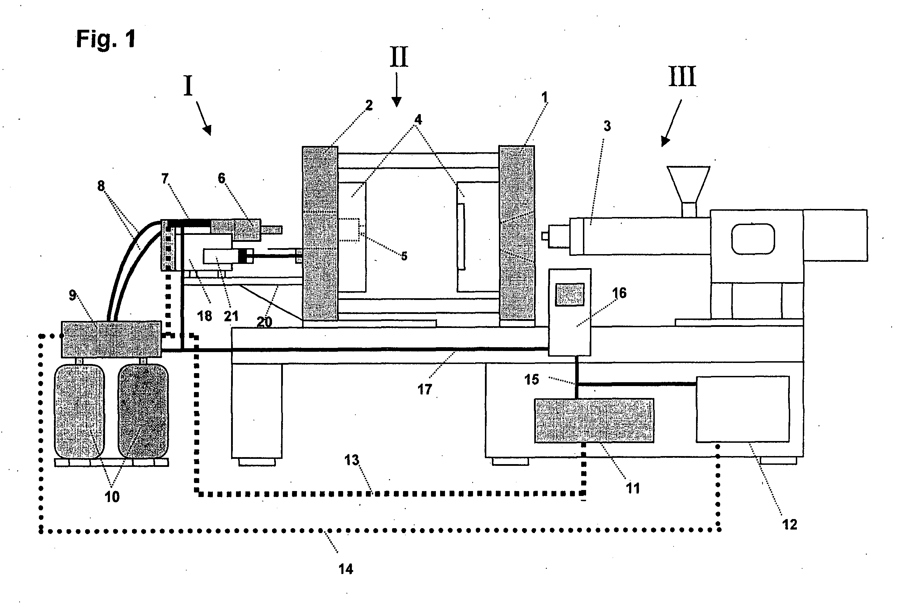

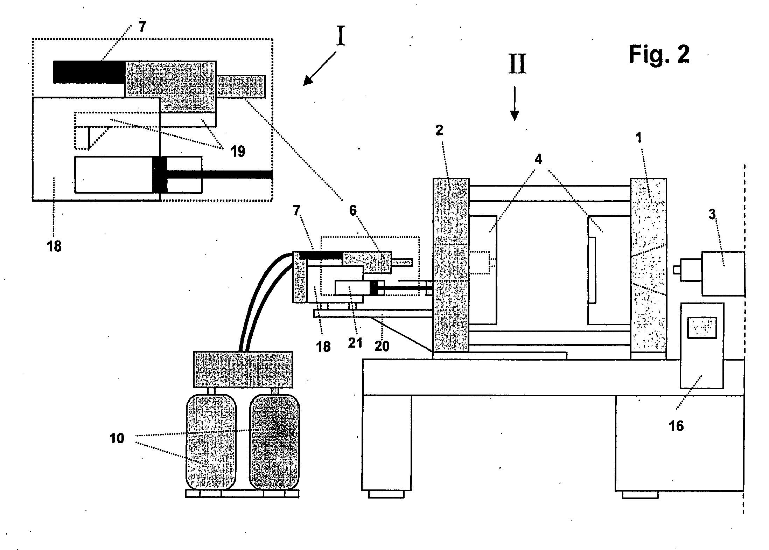

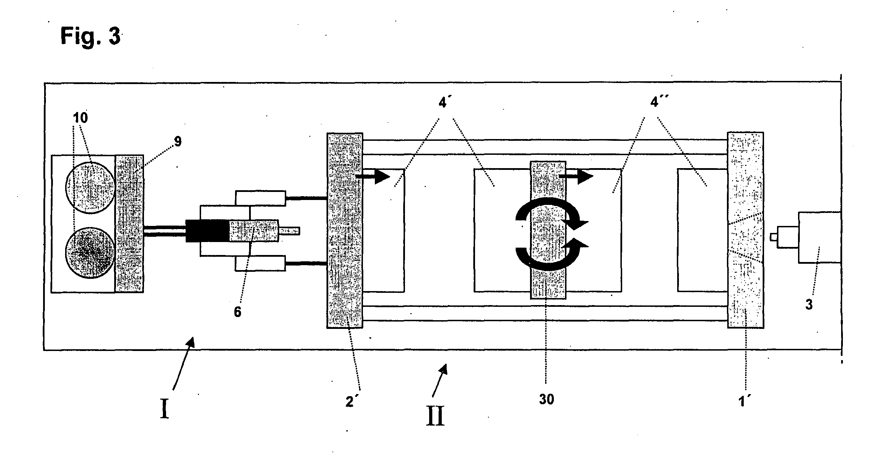

In Figur 1 ist eine erfindungsgemäße integrierte Systemvorrichtung nur sehr schematisch gezeigt. Doch lässt sich daran wie auch anhand der übrigen Figuren 2 und 3 der Kern der vorliegenden Erfindung gut erläutern. Allerdings ist die vorliegende Erfindung nicht auf diese Ausführungsform beschränkt.

Die integrierte Systemvorrichtung umfasst im wesentlichen drei große Bereiche, nämlich eine Polyurethan-Einheit I, eine Schließeinheit II sowie eine Plastifizier- und Einspritzeinheit III.

Die Plastifizier- und Einspritzeinheit III ist in üblicher Weise ausgebildet und weist eine in einem Plastifizierzylinder drehbar und verschieblich aufgenommene Plastifizierschnecke (nicht näher dargestellt) auf. Die Plastifiziereinheit (auch Bezugszeichen 3) ist auf einem Maschinenbett aufgenommen, die auch die Schließeinheit II trägt. Am hinteren (in Fig. 1 rechten) Ende der Plastifizier- und Schließeinheit III ist ein elektrischer Antrieb angeordnet, der die Plastifizierschnecke sowohl rotatorisch antreibt wie auch axial hin und her schieben kann (Antrieb für die Einspritzung).

Über einen Einfülltrichter wird ein Ausgangsmaterial in die Plastifizier- und Einspritzeinheit III eingeführt. Dieses Material wird nachfolgend aufgeschmolzen und - wenn ausreichend Schmelzematerial in einem Schneckenvorraum gesammelt ist - in eine Kavität eines geschlossenen Formwerkzeugs 4 eingespritzt. Vorliegend ist in der Plastifizier- und Einspritzeinheit III nur ein Antrieb angedeutet. Es können jedoch noch eine Reihe weiterer Antriebe, wie ein Antrieb zum Anpressen dieser Einheit an ein Formwerkzeug etc. vorgesehen sein.

Die Schließeinheit II gemäß Fig. 1 umfasst zwei Aufspannplatten 1 und 2, an denen jeweils eine Hälfte eines Formwerkzeugs 4 befestigt ist. Vorliegend ist die (in Fig. 1) links dargestellte Aufspannplatte 2 hin- und her beweglich verschiebbar ausgebildet, so dass das Formwerkzeug 4 durch Verschieben dieser Aufspannplatte 2 geschlossen und geöffnet werden kann. Im Formwerkzeug 4 ist eine Formkavität (Formhohlraum) ausgebildet, in die bei geschlossenem Werkzeug das Thermoplast-Material eingespritzt werden kann.

Im linken Teil der Figur 1 ist die Polyurethan-Einheit I dargestellt, die einen PUR-Mischkopf 6 umfasst, der über Komponentenleitungen 8 mit einem Dosiermodul für die Polyurethan-Komponenten verbunden ist. Das Dosiermodul ist wiederum mit zwei Behältern 10 für die Polyurethan-Komponenten Polyol und Isocyanat gekoppelt.

Der Mischkopf ist vorliegend auf einer Montage- und Verfahrensvorrichtung 18 angeordnet, die wiederum auf einer Podestplatte 20 beweglich nach vorne (Richtung Aufspannplatte 2) und zurück (von der Aufspannplatte 2 weg) verfahrbar ist. Die Podestplatte 20 ist an der beweglichen Aufspannplatte 2 starr befestigt. Die Montage-und Verfahrensvorrichtung 18 nimmt auch das Ansteuermodul für den PUR-Mischkopf auf, welches zwischen die Komponentenleitungen und den Mischkopf 6 zwischengeschaltet ist und eine Schaltfunktion für die Zufuhr der Polyurethan-Komponenten zum Mischkopf 6 ausübt.

Die Montage- und Verfahrvorrichtung 18 ist unter Zwischenschaltung eines Antriebs 21 mit der beweglichen Aufspannplatte 2 in der Weise verbunden, dass beim Betrieb des Antriebs 21 die Montage- und Verfahrvorrichtung zusammen mit dem darauf angeordneten Mischkopf 6 zur Aufspannplatte 2 hin oder von dieser weg verschoben werden kann. Der Antrieb 21 ist überdies so ausgebildet, dass der Mischkopf 6 im Bereich des Polyurethan-Angusses 5 an die Hälfte des Formwerkzeugs 4 angepresst werden kann. Vorliegend ist der Antrieb 21 in hydraulischer Form also mit einer Kolben-Zylinder Antriebseinheit ausgebildet, wobei ein Ende an der Aufspannplatte 2 und ein Ende an der Montage- und Verfahrvorrichtung angreift.

Bei der erfindungsgemäßen integrierten Systemvorrichtung gemäß Figur 1 ist eine zentrale Steuerung 16 vorgesehen sowie eine gemeinsame Hydraulikversorgungseinrichtung 11 und eine gemeinsame Elektrikversorgungseinheit 12. Sowohl die Hydraulikversorgungseinrichtung wie auch die Elektrikversorgungseinheit 12 sind unmittelbar mit der zentralen Steuerung 16 verbunden und enthalten von ihr entsprechende Steuerungsbefehle. Die zentrale Steuerung 16 ist überdies aber auch noch unmittelbar mit verschiedenen Komponenten separat verbunden und kontrolliert diese unmittelbar. Vorliegend besteht diesbezüglich eine unmittelbare Verbindung zwischen der zentralen Steuerung 16 einerseits und dem Dosiermodul 9 sowie dem Ansteuermodul 7 andererseits. Natürlich können aber auch noch weitere Steuer- und Schaltelemente von der zentralen Steuerung 16 unmittelbar Steuerbefehle erhalten. Überdies kann die zentrale Steuerung 16 mit Sensoren verbunden sein, von denen sie Informationen übermittelt bekommt. Derartige Sensoren und Verbindungen dazu sind vorliegend jedoch nicht dargestellt.

Die gemeinsame Hydraulikversorgungseinrichtung 11 ist ebenfalls mit dem Ansteuermodul 7 sowie dem Dosiermodul 9 verbunden. Nicht dargestellt sind weitere Verbindungen beispielsweise zum Antrieb für die Schließeinheit 2 oder zum Auswerfer für die Schließeinheit sowie möglicherweise zur Plastifizier- und Einspritzeinheit 3.

Die gemeinsame Elektroversorgungseinheit 12 ist vorliegend verbunden mit dem Dosiermodul 9 und dem Antrieb für die Plastifizier- und Einspritzeinheit 3.

Damit kann die integrierte Systemvorrichtung mit einer einzigen Zentralsteuerung 16 gesteuert, betrieben und überwacht werden, wobei auch eine einheitliche Bedienphilosophie für die gesamte Anlage realisierbar ist. Zudem benötigt man nur eine einzige Hydraulikversorgungseinrichtung und Elektrikversorgungseinheit und nicht, wie vorher beim Stand der Technik, verschiedene Hydraulik- und Elektrikversorgungseinrichtungen.

In Figur 2 ist ein Teil der in Figur 1 dargestellten integrierten Systemvorrichtung nochmals gezeigt, wobei im linken oberen Teil der Fig. 2 der Bereich der Montage- und Verfahrvorrichtung vergrößert schematisch dargestellt ist. Hier kann man nochmals erkennen, wie der Mischkopf 6 zusammen mit dem Ansteuermodul für den Polyurethan-Mischkopf auf dem Adapter 19 koppelbar befestigt ist. Der Adapter 19 stellt eine Möglichkeit dar, verschiedene Mischkopfarten unmittelbar mit der Montage- und Verfahrvorrichtung 18 zu koppeln. Damit kann dieses integrierte System sehr variabel eingesetzt werden.

In Figur 3 ist eine schematische Draufsicht auf eine abgeänderte integrierte Systemvorrichtung gezeigt, wobei sich die Vorrichtung gegenüber der in Figur 1 dargestellten Vorrichtung insbesondere dadurch unterscheidet, dass zwischen den beiden Aufspannplatten 1' und 2' der Schließeinheit II' nunmehr eine Wendeplatten-Dreheinrichtung 30 angeordnet ist. Sowohl zwischen der Aufspannplatte 1' und der Wendeplatte 30 wie auch zwischen der Aufspannplatte 2' und der Wendeplatte 30 sind Formwerkzeuge angeordnet, die durch Verfahren von der beweglichen Aufspannplatte 2' sowie der Wendeplatte 30 in Richtung der Aufspannplatte 1' geschlossen und bei entgegengesetzter Bewegungsweise geöffnet werden können. Mit einer Anlage, wie sie in Figur 3 gezeigt ist, ist es möglich, zyklusweise mit Polyurethan beschichtete Thermoplast-Materialien auszubilden, wobei in einem ersten Schritt in dem Formwerkzeug 4" ein Thermoplast-Produkt gebildet wird. Nach dem Öffnen der Schließeinheit II' wird die Wendeplatte um 180° gedreht, wobei das in der Kavität des Formwerkzeugs 4" hergestellte Thermoplast-Formteil in der Formwerkzeughälfte der Wendeplatte mitgenommen wird, und die Schließeinheit wieder geschlossen. Durch entsprechende Ausbildung der aufspannplattenseitigen Werkzeughälfte des Formwerkzeugs 4' wird nunmehr zwischen dem in der Wendeplatte verbliebenen Thermoplast-Produkt und der anderen Kavitätswand ein Hohlraum gebildet (vergrößerte Kavität), in die sodann das Polyurethan-Material mittels dem dann angefahrenen Mischkopf 6 in einen Hohlraum zwischen dem Formwerkzeug und dem in der Kavität aufgenommenen Thermoplast-Produkt eingespritzt werden kann. Damit wird das Thermoplast-Produkt überflutet bzw. beschichtet und ein Mehrschichtteil bestehend aus einem Thermoplastmaterial und einer Polyurethanoberfläche gebildet.

Insgesamt ist es mit der vorliegenden Erfindung möglich, eine integrierte Systemvorrichtung mit einer Polyurethan-Einheit und einer Plastifizier- und Einspritzeinheit mit nur einer gemeinsamen Hydraulikanlage oder einer gemeinsamen Elektrik zu betreiben. Dies bringt einen Kosten-, aber auch einen Platzvorteil gegenüber handelsüblichen Anlagen mit jeweils eigenen Hydraulikanlagen und Elektrikversorgungseinrichtungen. Durch die Reduzierung der Bauteile und die gemeinsame Nutzung von Hydraulik, Elektrik-, Pneumatik- und Steuerungsmodulen wird ein hoher Kostenvorteil erreicht. Auch ergibt sich eine bessere Bedienbarkeit durch ein einheitliches Steuerungs- und Regelungskonzept, was zu einem geringeren Schulungsaufwand für das Bedienpersonal führt. Durch die intensive Verzahnung ist ferner eine erhöhte Prozesssteuerung und eine erhöhte Prozesspräzision möglich, was zu einer besseren Stabilität führt. Nicht zuletzt sind damit ein geringer Produktionsausschuss und ein geringerer Energieverbrauch möglich.

### Bezugszeichenliste

- 1: Feste Aufspannplatte
- 2: Bewegliche Aufspannplatte
- 3: Plastifizier- und Einspritzeinheit
- 4, 4', 4": Formwerkzeug
- 5: Anguss für PUR-Einspritzung
- 6: PUR-Mischkopf
- 7: Ansteuermodul für PUR-Mischkopf
- 8: Komponentenleitungen für Polyol- und Isocyanatkomponenten
- 9: Dosiermodul für Polyol- und Isocyanat-Komponenten
- 10: Behälter für Polyol- und Isocyanatkomponenten
- 11: Gemeinsame Hydraulikanlage für PUR-Einheit und Plastifizier- und Spritzeinheit
- 12: Gemeinsame Elektroeinheit für PUR-Einheit und Plastifizier- und Spritzeinheit
- 13: Hydraulikversorgungsleitung für Dosier- und Ansteuermodul
- 14: Elektroversorgungsleitung für PUR-Einheit
- 15: Steuerungsleitung für Elektro- und Hydraulikversorgung
- 16: Gemeinsame Steuerung
- 17: Steuerungsleitung für Dosier- und Ansteuermodul
- 18: Montage- und Verfahrvorrichtung für PUR-Mischkopf
- 19: Adapter für PUR-Mischkopf
- 20: Podestplatte
- 21: Antrieb für Montage- und Verfahrvorrichtung
- 30: Wendeplatte

## Patentansprüche

1. Integrierte Systemvorrichtung zur Herstellung von Verbundkörpern umfassend
- zumindest eine Polyurethan-Einheit (I) mit einem Mischkopf (6) zum Mischen einer Polyol- und einer Isocyanatkomponente,
- zumindest eine Plastifizier- und Einspritzeinheit (III), die zum Aufschmelzen und nachfolgenden Einspritzen eines Thermoplastmaterials geeignet ist,
- eine Schließeinheit (II), die zur Aufnahme zumindest eines Formwerkzeugs (4, 4', 4") ausgebildet ist, wobei sowohl die Plastifizier- und Einspritzeinheit (III) wie auch die Polyurethan-Einheit (I) das von ihnen jeweils zu verarbeitende Material in einen Formhohlraum des in der Schließeinheit (II) aufgenommenen Formwerkzeugs einbringen kann, sowie
- eine einzige zentrale Steuerung (16) für das gesamte System,
**dadurch gekennzeichnet, dass**
eine gemeinsame Hydraulikversorgungseinrichtung (11) und ein gemeinsames Elektrikversorgungssystem (12) vorgesehen sind,
die zentrale Steuerung (16) mit der gemeinsamen Hydraulikversorgungseinrichtung (11) sowie mit dem gemeinsamen Elektrikversorgungssystem (12) verbunden ist und die gemeinsame Hydraulikversorgungseinrichtung (11) sowie das gemeinsame Elektrikversorgungssystem (12) die Polyurethan-Einheit (I) wie auch die Plastifizier- und Einspritzeinheit (II) gemeinsam beaufschlagen.

2. Integrierte Systemvorrichtung nach Anspruch 1,
**dadurch gekennzeichnet,**
**dass** zudem eine gemeinsame Pneumatikversorgungseinrichtung vorgesehen ist.

3. Integrierte Systemvorrichtung nach Anspruch 1 oder 2,
**dadurch gekennzeichnet,**
**dass** zumindest eine der Versorgungseinrichtungen auch die Schließeinheit (4, 4', 4") beaufschlagt.

4. Integrierte Systemvorrichtung nach einem der vorhergehenden Ansprüche,
**dadurch gekennzeichnet,**
**dass** die Polyurethan-Einheit (I) ein Dosiermodul (7) umfasst, welches von der zentralen Steuerung (16) und/oder von zumindest einer Versorgungseinrichtung (11) beaufschlagt ist.

5. Integrierte Systemvorrichtung nach einem der vorhergehenden Ansprüche 2 bis 4,
**dadurch gekennzeichnet,**
**dass** die gemeinsame Pneumatikanlage wenigstens zwei Einheiten aus der Gruppe der Schließeinheit (II), der Plastifizier- und Einspritzeinheit (III), der Polyurethan-Einheit (I), der Verfahrvorrichtung (18, 21), der Gasdosierstation, des Farbmoduls und der Einrichtung zur Aufbringung des Trennmittels beaufschlagt.

6. Integrierte Systemvorrichtung nach einem der vorhergehenden Ansprüche,
**dadurch gekennzeichnet,**
**dass** die gemeinsame Hydraulikversorgungseinrichtung (11) wenigstens zwei Einheiten aus der Gruppe der Schließeinheit (II), der Plastifizier- und Einspritzeinheit (III), der Polyurethan-Einheit (I), der Gasdosierstation, des Farbmoduls und der Verfahreinrichtung (18, 21) beaufschlagt.

7. Integrierte Systemvorrichtung nach einem der vorhergehenden Ansprüche,
**dadurch gekennzeichnet,**
**dass** das gemeinsame Elektriksystem (12) wenigstens zwei Einheiten aus der Gruppe der Schließeinheit (II), der Plastifizier- und Einspritzeinheit (III), der Polyurethan-Einheit (I), der Verfahrvorrichtung (18, 21), der Gasdosierstation, des Farbmoduls und der Einrichtung zur Aufbringung des Trennmittels beaufschlagt.

8. Integrierte Systemvorrichtung nach einem der vorhergehenden Ansprüche,
**dadurch gekennzeichnet,**
**dass** die Polyurethan-Einheit (I) eine Andrückvorrichtung (21) aufweist, die eine Anpressung des Mischkopfes an ein Formwerkzeug (4, 4') ermöglicht, wobei die Andrückvorrichtung (21) hydraulisch, pneumatisch oder elektrisch betrieben ist.

9. Integrierte Systemvorrichtung nach einem der vorhergehenden Ansprüche,
**dadurch gekennzeichnet,**
**dass** die gemeinsame Hydraulikversorgungseinrichtung (11) zumindest zwei getrennte Systemkreise aufweist, von denen ein Systemkreis der Polyurethan-Einheit (I) und ein Systemkreis der Plastifizier- und Einspritzeinheit (III) zugeordnet ist.

10. Integrierte Systemvorrichtung nach einem der vorhergehenden Ansprüche,
**dadurch gekennzeichnet,**
**dass** der PUR-Mischkopf (6) ausschließlich elektrisch angetrieben ist.

11. Integrierte Systemvorrichtung nach Anspruch 10,
**dadurch gekennzeichnet,**
**dass** ein Mischkammerkolben und/oder ein Reinigungskolben des Mischkopfes (6) mittels eines Elektromotors angetrieben sind.

12. Integrierte Systemvorrichtung nach Anspruch 11,
**dadurch gekennzeichnet,**
**dass** der Elektromotor mit dem PUR-Mischkopf (6) über ein Schnellkupplungssystem verbindbar oder verbunden ist.

13. integrierte Systemvorrichtung nach einem der Ansprüche 10 bis 12,
**dadurch gekennzeichnet,**
**dass** eine Vorrichtung zur Erfassung des Drehmoments des elektrischen Antriebs vorgesehen ist und ein Signal dieser Erfassungsvorrichtung der zentralen Steuerung (16) zuführbar ist.

14. Integrierte Systemvorrichtung nach einem der Ansprüche 12 oder 13,
**dadurch gekennzeichnet,**
**dass** eine Vorrichtung zur Erfassung der Geschwindigkeit des elektrischen Antriebs vorgesehen ist und ein Signal dieser Erfassungsvorrichtung der zentralen Steuerung (16) zuführbar ist.

15. Integrierte Systemvorrichtung nach einem der vorhergehenden Ansprüche,
**dadurch gekennzeichnet,**
**dass** die zentrale Steuerung (16) zur Regelung der Schließkraft der Schließeinheit ausgebildet ist.

16. Integrierte Systemvorrichtung nach Anspruch 15,
**dadurch gekennzeichnet,**
**dass** die zentrale Steuerung (16) zur Regelung der Schließkraft in Abhängigkeit des PUR-Injektionsdruckes ausgebildet ist.

17. Integrierte Systemvorrichtung nach einem der vorhergehenden Ansprüche,
**dadurch gekennzeichnet,**
**dass** eine Temperiervorrichtung für das zumindest eine Formwerkzeug vorgesehen ist, die Temperiervorrichtung mit der zentralen Steuerung (16) verbunden ist und die zentrale Steuerung (16) zur Beaufschlagung der Temperiervorrichtung ausgebildet ist.

18. Integrierte Systemvorrichtung nach Anspruch 17,
**dadurch gekennzeichnet,**
**dass** die zentrale Steuerung (16) zur Regelung der Temperatur in Abhängigkeit von der PUR-Befüllung eines Formhohlraums ausgebildet ist.

19. Integrierte Systemvorrichtung nach einem der vorhergehenden Ansprüche,
**dadurch gekennzeichnet,**
**dass** die gemeinsame Steuerung zur Master-Slave-Regelung ausgebildet ist, so dass die PUR-Einheit in Abhängigkeit vom Betrieb der Plastifizier- und Einspritzeinheit zyklussynchron steuer- oder regelbar ist.

## Claims

1. Integrated system device for the production of composite bodies comprising
- at least one polyurethane unit (I) with a mixing head (6) for mixing a polyol component and an isocyanate component,
- at least one plasticizing and injection unit (III) which is suitable for melting and subsequently injecting a thermoplastic material,
- a clamping unit (II) which is constructed to receive at least one forming tool (4,4',4"), wherein both the plasticizing and injection unit (III) and also the polyurethane unit (I) can bring the material, which is to be processed by them respectively, into a mould cavity of the forming tool which is held in the clamping unit (II), and
- a single central control arrangement (16) for the entire system,
**characterized in that**
a shared hydraulic supply arrangement (11) and a shared electric supply system (12) are provided,
the central control arrangement (16) is connected with the shared hydraulic supply arrangement (11) and with the shared electric supply system (12) and the shared hydraulic supply arrangement (11) and the shared electric supply system (12) act jointly upon the polyurethane unit (I) and also the plasticizing and injection unit (III).

2. Integrated system device according to Claim 1,
**characterized in that**
in addition a shared pneumatic supply arrangement is provided.

3. Integrated system device according to Claim 1 or 2,
**characterized in that**
at least one of the supply arrangements also acts upon the clamping unit (4,4',4").

4. Integrated system device according to one of the preceding claims,
**characterized in that**
the polyurethane unit (I) comprises a dosing module (7) which is acted upon by the central control arrangement (16) and/or by at least one supply arrangement (11).

5. Integrated system device according to one of the preceding Claims 2 to 4,
**characterized in that**
the shared pneumatic installation acts upon at least two units of the group of clamping unit (II), the plasticizing and injection unit (III), the polyurethane unit (I), the travel device (18,21), the gas dosing station, the dye module and the arrangement for the application of the separating agent.

6. Integrated system device according to one of the preceding claims,
**characterized in that**
the shared hydraulic supply arrangement (11) acts upon at least two units of the group of clamping unit (II), the plasticizing and injection unit (III), the polyurethane unit (I), the gas dosing station, the dye module and the travel arrangement (18,21).

7. Integrated system device according to one of the preceding claims,
**characterized in that**
the shared electric system (12) acts upon at least two units of the group of clamping unit (II), the plasticizing and injection unit (III), the polyurethane unit (I), the travel device (18,21), the gas dosing station, the dye module and the arrangement for the application of the separating agent.

8. Integrated system device according to one of the preceding claims,
**characterized in that**
the polyurethane unit (I) has a pressing device (21), which makes possible a pressure of the mixing head onto a forming tool (4,4'), wherein the pressing device (21) is operated hydraulically, pneumatically or electrically.

9. Integrated system device according to one of the preceding claims,
**characterized in that**
the shared hydraulic supply arrangement (11) has at least two separate system circuits, of which one system circuit is associated with the polyurethane unit (I) and one system circuit is associated with the plasticizing and injection unit (III).

10. Integrated system device according to one of the preceding claims,
**characterized in that**
the PUR mixing head (6) is exclusively driven electrically.

11. Integrated system device according to Claim 10,
**characterized in that**
a mixing chamber piston and/or a cleaning piston of the mixing head (6) are driven by means of an electric motor.

12. Integrated system device according to Claim 11,
**characterized in that**
the electric motor is connectable or is connected with the PUR mixing head (6) via a quick-action coupling system.

13. Integrated system device according to one of Claims 10 to 12,
**characterized in that**
a device is provided for detecting the torque of the electric drive, and a signal from this detection device is able to be supplied to the central control arrangement (16).

14. Integrated system device according to one of Claims 12 or 13,
**characterized in that**
a device is provided for detecting the speed of the electric drive, and a signal from this detection device is able to be supplied to the central control arrangement (16).

15. Integrated system device according to one of the preceding claims,
**characterized in that**
the central control (16) is constructed for regulating the clamping force of the clamping unit.

16. Integrated system device according to Claim 15,
**characterized in that**
the central control arrangement (16) is constructed for regulating the clamping force as a function of the PUR injection pressure.

17. Integrated system device according to one of the preceding claims,
**characterized in that**
a tempering device is provided for the at least one forming tool, the tempering device is connected with the central control arrangement (16) and the central control arrangement (16) is constructed for acting upon the tempering device.

18. Integrated system device according to Claim 17,
**characterized in that**
the central control arrangement (16) is constructed for regulating the temperature as a function of the PUR fill of a mould cavity.

19. Integrated system device according to one of the preceding claims,
**characterized in that**
the shared control arrangement is constructed for master/slave regulation, so that the PUR unit is able to be controlled or regulated in cycle synchronism as a function of the operation of the plasticizing and injection unit.

## Revendications

1. Dispositif de système intégré pour la fabrication de corps composites comprenant
- au moins une unité de polyuréthane (I) avec une tête mélangeuse (6) pour le mélange d'un composant de polyol et d'un composant d'isocyanate,
- au moins une unité de plastification et d'injection (III), qui est appropriée pour la fusion et l'injection consécutive d'un matériau thermoplastique,
- une unité de fermeture (II), qui est conçue pour la réception d'au moins un outil de moulage (4, 4', 4"), aussi bien l'unité de plastification et d'injection (III) que l'unité de polyuréthane (I) pouvant introduire le matériau à traiter respectivement par ces unités dans une cavité de moulage de l'outil de moulage réceptionné dans l'unité de fermeture (II), et
- une unique commande (16) centrale pour l'ensemble du système,
**caractérisé en ce que**
un dispositif d'alimentation hydraulique (11) commun et un système d'alimentation électrique (12) commun sont prévus,
la commande (16) centrale est reliée au dispositif d'alimentation hydraulique (11) commun et au système d'alimentation électrique (12) commun et
le dispositif d'alimentation hydraulique (11) commun ainsi que le système d'alimentation électrique (12) commun alimentent ensemble l'unité de polyuréthane (I) de même que l'unité de plastification et d'injection (II).

2. Dispositif de système intégré selon la revendication 1,
**caractérisé en ce que**
il est prévu en plus un dispositif d'alimentation pneumatique commun.

3. Dispositif de système intégré selon la revendication 1 ou 2,
**caractérisé en ce que**
au moins l'un des dispositifs d'alimentation alimente également l'unité de fermeture (4, 4', 4'').

4. Dispositif de système intégré selon l'une quelconque des revendications précédentes,
**caractérisé en ce que**
l'unité de polyuréthane (I) comporte un module de dosage (7), qui est alimenté par la commande (16) centrale et/ou par au moins un dispositif d'alimentation (11).

5. Dispositif de système intégré selon l'une quelconque des revendications 2 à 4 précédentes,
**caractérisé en ce que**
l'installation pneumatique commune alimente au moins deux unités à partir du groupe de l'unité de fermeture (II) de l'unité de plastification et d'injection (III), de l'unité de polyuréthane (I), du dispositif de déplacement (18, 21), de la station de dosage de gaz, du module de couleur et du dispositif pour l'application de l'agent de séparation.

6. Dispositif de système intégré selon l'une quelconque des revendications précédentes,
**caractérisé en ce que**
le dispositif d'alimentation hydraulique (11) commun alimente au moins deux unités à partir du groupe de l'unité de fermeture (II), de l'unité de plastification et d'injection (III), de l'unité de polyuréthane (I), de la station de dosage de gaz, du module de couleur et du dispositif de déplacement (18, 21).

7. Dispositif de système intégré selon l'une quelconque des revendications précédentes,
**caractérisé en ce que**
le système électrique (12) commun alimente au moins deux unités à partir du groupe de l'unité de fermeture (II), de l'unité de plastification et d'injection (III), de l'unité de polyuréthane (I), du dispositif de déplacement (18, 21), de la station de dosage de gaz, du module de couleur et du dispositif pour l'application de l'agent de séparation.

8. Dispositif de système intégré selon l'une quelconque des revendications précédentes,
**caractérisé en ce que**
l'unité de polyuréthane (I) présente un dispositif d'appui (21) qui permet un appui de la tête mélangeuse sur un outil de moulage (4, 4'), le dispositif d'appui (21) étant exploité de façon hydraulique, pneumatique ou électrique.

9. Dispositif de système intégré selon l'une quelconque des revendications précédentes,
**caractérisé en ce que**
le dispositif d'alimentation hydraulique (11) commun présente au moins deux circuits de système séparés, dont l'un est attribué à l'unité de polyuréthane (I) et un autre à l'unité de plastification et d'injection (III).

10. Dispositif de système intégré selon l'une quelconque des revendications précédentes,
**caractérisé en ce que**
la tête mélangeuse de polyuréthane (6) est entraînée exclusivement de façon électrique.

11. Dispositif de système intégré selon la revendication 10,
**caractérisé en ce que**
un piston de chambre de mélange et/ou un piston de nettoyage de la tête mélangeuse (6) sont entraînés au moyen d'un moteur électrique.

12. Dispositif de système intégré selon la revendication 11,
**caractérisé en ce que**
le moteur électrique peut être relié ou est relié à la tête mélangeuse de polyuréthane (6) au moyen d'un système d'accouplement rapide.

13. Dispositif de système intégré selon l'une quelconque des revendications 10 à 12,
**caractérisé en ce que**
un dispositif pour l'enregistrement du couple de l'entraînement électrique est prévu et un signal de ce dispositif de détection peut être amené à la commande (16) centrale.

14. Dispositif de système intégré selon l'une quelconque des revendications 12 ou 13,
**caractérisé en ce que**
un dispositif pour l'enregistrement de la vitesse de l'entraînement électrique est prévu et un signal de ce dispositif d'enregistrement peut être amené à la commande (16) centrale.

15. Dispositif de système intégré selon l'une quelconque des revendications précédentes,
**caractérisé en ce que**
la commande (16) centrale est conçue pour le réglage de la force de fermeture de l'unité de fermeture.

16. Dispositif de système intégré selon la revendication 15,
**caractérisé en ce que**
la commande (16) centrale est conçue pour le réglage de la force de fermeture en fonction de la pression d'injection de polyuréthane.

17. Dispositif de système intégré selon l'une quelconque des revendications précédentes,
**caractérisé en ce que**
un dispositif de mise à température est prévu pour le au moins un outil de moulage, le dispositif de régulation de température est relié à la commande (16) centrale et la commande centrale (16) est conçue pour l'alimentation du dispositif de régulation de température.

18. Dispositif de système intégré selon la revendication 17,
**caractérisé en ce que**
la commande (16) centrale est conçue pour le réglage de la température en fonction du remplissage par du polyuréthane d'une cavité creux de moulage.

19. Dispositif de système intégré selon l'une quelconque des revendications précédentes,
**caractérisé en ce que**
la commande commune est conçue pour le réglage maître-esclave, de sorte que l'unité de polyuréthane peut être commandée ou réglée de façon synchrone avec le cycle en fonction de l'exploitation de l'unité de plastification et d'injection.
